# EUROPEAN PATENT APPLICATION

(11) **EP 4 437 912 A1**
(43) Date of publication of application: **02.10.2024**
(21) Application number: 24165820.2
(22) Date of filing: 25.03.2024
(51) Int. Cl.: A47J 27/21

(54) **A LID AND A CONTAINER**

(30) Priority: 27.03.2023 CN 202320699517 U
(71) Applicant: Zhejiang Shaoxing Supor Domestic Electrical Appliance Co., Ltd., Shaoxing Zhejiang 312071 (CN)
(72) Inventor: WU, Yu, Shaoxing, 312071 (CN); LIU, Huaqing, Shaoxing, 312071 (CN)
(74) Representative: LLR

(57) **Abstract**

The present invention relates to a lid (1) and a container comprising the lid (1) covering a container body (2). The lid (1) comprises a water outlet (11) for discharging condensed water in the lid (1) and comprising a first part (111) and a second part (112) that are connected with each other, the first part (111) being arranged in a bottom wall (12) of the lid (1), the second part (112) being arranged in a side wall (13) of the lid (1). Compared to the prior art, where the water outlet is arranged only in the bottom wall or only in the side wall of the lid, the water outlet in the present invention is open towards more directions, and thus condensed water can flow from the inner chamber of the lid to the exterior of the lid in more directions. Thus, condensed water can be discharged rapidly from the water outlet, increasing the discharging efficiency.

## Description

The present invention relates to the technical field of liquid containers, and in particular, to a lid and a container.

As containers used for holding water, kettles are widely used in households.

Generally, a kettle comprises a container body and a lid covering the container body. The lid is generally provided with an air inlet, an accommodating chamber, and a water outlet that are in communication with each other so that water vapor in the container body enters the accommodating chamber via the air inlet and then condenses into liquid water, which can then be discharged out of the lid via the water outlet.

However, in the prior art, the water outlet is generally arranged either on the side wall or on the bottom wall of the lid. When a user operates the lid to perform an operation of discharging water, it is difficult for condensed water to be discharged via the water outlet, and a lot of condensed water still remains in the accommodating chamber. The user needs to perform the drainage operation for multiple times and has a relatively poor utilization experience. In addition, in the prior art, the blocking structure used for blocking the water outlet is rather complicated.

The present invention provides a lid and a container with high efficiency in discharging condensed water in the lid and providing good user experience.

A first aspect of the present invention provides a lid comprising a water outlet for discharging condensed water in the lid and comprising a first part and a second part that are connected with each other, the first part being arranged in a bottom wall of the lid, the second part being arranged in a side wall of the lid.

When a user needs to discharge the condensed water in the lid, the user can just remove the lid from the container body so that the water outlet can be in an open state. As the bottom wall of the lid is provided with the first part of the water outlet, the side wall of the lid is provided with the second part of the water outlet, and the orientations of the bottom wall and the side wall are different, the orientations of the first part and the second part are different. Therefore, the direction in which condensed water can flow to the exterior of the lid can be the direction through the first part or the direction through the second part. Compared to the prior art, where the water outlet is arranged only in the bottom wall or only in the side wall of the lid, the water outlet in the present invention is open towards more directions, and thus condensed water can flow from the inner chamber of the lid to the exterior of the lid in more directions. Thus, condensed water can be discharged rapidly from the water outlet, increasing the discharging efficiency. Secondly, in the present invention, the first part arranged in the bottom wall and the second part arranged in the side wall are connected with each other. When a user operates the lid to perform an operation of discharging water, compared to the prior art, it is less possible that condensed water remains at the side wall or at the bottom wall of the lid. This allows the user to discharge the condensed water from the inner chamber of the lid to the exterior of the lid by slightly shaking the lid or with fewer times of shaking. Not only is the intensity of operation needed for a user lower, but also the amount of condensed water that remains in the inner chamber of the lid is reduced. The lid is not susceptible to bacteria growth, and the user has a better utilization experience.

In a possible embodiment, the lid is provided with a recess that concaves towards an inner chamber of the lid, the first part and the second part being both arranged in inner walls of the recess.

Since the blocking member for blocking the water outlet of the lid is arranged inside the container body, the blocking member will protrude relative to the inner wall of the container body. The lid of the present invention is provided with a recess that concaves towards the inner chamber, with the first part and the second part both arranged in the inner walls of the recess. For example, the first part is arranged in a bottom inner wall of the recess, and/or, the second part is arranged in a side inner wall of the recess. When the lid covers the container body, the recess accommodates at least a portion of the blocking member so that the block member can block the water outlet without any structural interference between the lid and the blocking member. The arrangement of the recess in the present invention renders the structure between the lid, the container body, and the blocking member arranged at the container body more compact. Therefore, there is no need to reduce the overall size of the lid so that the space of the inner chamber of the lid is still relatively large and can accommodate a relatively large amount of condensed water. Thus, a user does not need to discharge condensed water very often, and the user's experience is improved.

In a possible embodiment, the bottom wall of the lid comprises a first bottom wall and a second bottom wall that are connected with each other, the first bottom wall being part of the inner wall of the recess, the first part being arranged in the first bottom wall, the side wall of the lid comprises a first side wall and a second side wall, the first side wall being part of the inner wall of the recess, the second part being arranged in the first side wall.

Therefore, both the first and second parts of the water outlet are arranged in the inner wall of the recess. When the lid covers the container body, a blocking member may be inserted in the recess so as to block the water outlet. This arrangement allows a more compact structure between the lid, the container body and the blocking member arranged in the container body.

In a possible embodiment, the end of the second bottom wall close to the first bottom wall being lower than the end of the second bottom wall away from the first bottom wall.

As the second bottom wall forms the bottom structure of the inner chamber, most of the condensed water accumulates on the second bottom wall. When the end of the second bottom wall close to the first bottom wall is lower than the end of the second bottom wall away from the first bottom wall, the second bottom wall is inclined relative to a horizontal plane, and condensed water mainly accumulates at the end of the second bottom wall close to the first bottom wall under the effect of gravity. In other words, the condensed water mainly accumulates at the end of the second bottom wall close to the water outlet. Therefore, when the water outlet is in an open state, condensed water can be rapidly discharged from the water outlet, and is not prone to remain at the end of the second bottom wall away from the first bottom wall. More specifically, once the lid is removed from the blocking member arranged in the container body, the water outlet is opened and condensed water can flow directly from the water outlet to the inside of the container body before the lid is removed from the container body. This prevents the condensed water inside the lid from dripping onto a tabletop or the like, and thus improves the user experience.

In a possible embodiment, the first bottom wall is inclined relative to a horizontal plane, and the end of the first bottom wall away from the second bottom wall is higher than the end of the first bottom wall close to the second bottom wall.

With such arrangement, the first part of the water outlet located in the first bottom wall is inclined, and thus the opening direction of the first part (i.e. the direction perpendicular to the plane in which the first part is located) is inclined. This inclination facilitates the discharge of the condensed water from the lid. Condensed water is not prone to remain on the inner wall of the lid. Therefore, a user can discharge the condensed water from the inner chamber of the lid to the exterior of the lid by slightly shaking the lid or with fewer times of shaking. Not only the intensity of operation required for the user is lower, but also the residue of condensed water in the inner chamber of the lid is less. The lid is not susceptible to bacteria growth, and the user experience is better.

A second aspect of the present invention provides a container comprising a container body and the lid described above, the lid being capable of covering the container body so as to form the container for accommodating liquid, a cooperating part capable of blocking the water outlet of the lid being provided inside the container body. The container of the present invention also provides the above-described effects brought by the lid, which are not repeatedly described here.

In a possible embodiment, the container further comprises a handle connected with the container body, at least part of the handle being located inside the container body and comprising the cooperating part.

The handle is connected with the container body and designed to be held by a user, who thereby indirectly operates the container body. With the handle connected with the container body, the at least part of the handle located inside the container body can block the water outlet of the lid. Compared to the prior art, wherein a blocking member used for blocking a water outlet has to be separately provided in the container, the structure of the container of the present invention is simpler, and the required manufacturing and assembly process are also simpler.

In a possible embodiment, the handle comprises a handle body and a support comprising the cooperating part, the handle body being connected with the container body via the support, at least part of the support being located inside the container body.

The handle body is connected with the container body via the support and is designed to be held by a hand of a user, who thereby indirectly operates the container body. The support can perform both a function of connecting the container body together with the handle body, and a function of blocking the water outlet arranged at the lid. Compared to the prior art, wherein a blocking member used for blocking a water outlet has to be separately provided in the container, the structure of the container of the present invention is simpler, and the required manufacturing and assembly process are also simpler.

In a possible embodiment, the lid is provided with a recess that concaves towards the inner chamber of the lid, the water outlet being arranged in an inner wall of the recess, at least part of the cooperating part being fitted into the recess to block the water outlet.

When the lid covers the container body, at least part of the cooperating part is fitted into the recess and abuts against the inner wall of the recess. Such arrangement allows the cooperating part to perform a function of blocking the water outlet so that condensed water can accumulate inside the lid. At the same time, such arrangement further allows the cooperating part to perform a position limiting function with regard to the rotation movement of the lid along its own circumferential direction.

In a possible embodiment, the cooperating part has a first covering face and a second covering face that are connected with each other, the first covering face being capable of covering the first part of the water outlet, the second covering face being capable of covering the second part of the water outlet.

As such, the present invention allows blocking the water outlet by covering it. Such covering renders the operation of blocking the water outlet relatively simple and the difficulty of operation by a user relatively low, providing a better user experience.

In a possible embodiment, the first covering face is inclined relative to a horizontal plane, with the end of the first covering face close to the second covering face higher than the end of the first covering face away from the second covering face, and/or, the second covering face is inclined relative to a vertical direction, with the end of the second covering face away from the first covering face closer to the exterior of the container body than the end of the second covering face close to the first covering face.

Preferably, the first part of the water outlet is arranged in the first bottom wall and the second part of the water outlet is arranged in the first side wall, the angle Δ formed between the first bottom wall and the horizontal plane being equal to the angle β formed between the first covering face and the horizontal plane, the angle θ formed between first side wall and the vertical plane being equal to the angle γ formed between the second covering face and the vertical plane.

When only the first covering face is inclined relative to a horizontal plane, the end of the first covering face close to the second covering face is higher than the end of the first covering face away from the second covering face. Correspondingly, the plane in which the first part arranged at the bottom wall is located is also inclined relative to a horizontal plane, with the end of the first part close to the second part of the water outlet arranged at the side wall of the lid also higher than the end of the first part away from the second part. With such arrangement, when the lid covers the container body, the cooperation between the first covering face and the first bottom wall is a bevel fit. Under the effect of gravity, the first covering face and the first bottom wall tend to be adaptively fitted. Therefore, the first covering face can always cover the first part so as to achieve the blocking of the first part.

When only the second covering face is inclined relative to a vertical plane, the end of the second covering face away from the first covering face is closer to the exterior of the container body than the end of the second covering face close to the first covering face. Correspondingly, the plane in which the second part arranged in the side wall is located is also inclined relative to the vertical plane, with the end of the second part close to the first part arranged at the bottom wall of the lid also closer to the exterior of the lid than the end of the second part away from the first part. With such arrangement, when the lid covers the container body, the cooperation between the second covering face and the first side wall is a bevel fit. Under the effect of gravity, the second covering face and the first side wall tend to be adaptively fitted. Therefore, the second covering face can always cover the second part so as to achieve the blocking of the second part.

When the first covering face is inclined relative to the horizontal plane, the end of the first covering face close to the second covering face is higher than the end of the first covering face away from the second covering face. Correspondingly, the plane in which the first part arranged in the bottom wall is located is also inclined relative to the horizontal plane, with the end of the first part close to the second part of the water outlet arranged at the side wall of the lid also higher than the end of the first part away from the second part. At the same time, when the second covering face is inclined relative to the vertical plane, the end of the second covering face away from the first covering face is closer to the exterior of the container body than the end of the second covering face close to the second covering face. Correspondingly, the plane in which the second part arranged in the side wall is located is also inclined relative to the vertical plane, with the end of the second part close to the first part arranged in the bottom wall of the lid also closer to the exterior of the lid than the end of the second part away from the first part. With such arrangement, the container of the present invention may achieve simultaneously the effects described above in connection with the inclined arrangement of the first covering face and the inclined arrangement of the second covering face, which are not repeatedly described here.

In a possible embodiment, the angle β formed between the first covering face and the horizontal plane is such that 25° ≤ β ≤ 30°; and/or, the angle γ formed between the second covering face and the vertical plane such that 1° ≤ γ ≤ 5°
It should be understood that the foregoing general description and the following detailed description are merely exemplary and cannot limit the scope of the present invention.
Fig. 1 is a schematic structural view of a container provided by the present invention in a particular embodiment;
Fig. 2 is a top view of the container in Fig. 1;
Fig. 3 is a sectional view along the direction A of the container in Fig. 2;
Fig. 4 is a schematic structural view of the lid 1 in Fig. 3;
Fig. 5 is an axonometric view of the lid in Fig. 1;
Fig. 6 is a partial, enlarged view of the part C in Fig. 4;
Fig. 7 is an axonometric view of the support in Fig. 3;
Fig. 8 is a side view of the support in Fig. 7;
Fig. 9 is a partial, enlarged view of the part B in Fig. 3.

### References:

10 - container;
1 - lid;
   11 - water outlet;
      111 - first part;
      112 - second part;
   12 - bottom wall;
      121 - first bottom wall;
      122 - second bottom wall;
   13 - side wall
      131 - first side wall;
      132 - second side wall;
   14 - inner chamber;
   15 - recess;
   16 - air inlet;
2 - container body;
   21 - body;
   22 - spout;
3 - handle;
   31 - support;
      311 - cooperating part;
      311a - first covering face;
      311b - second covering face;
      312 - connecting rod;
   32 - handle body.

The accompanying drawings here, which are incorporated in and constitute a part of the specification, illustrate embodiments consistent with the present invention and together with the specification, serve to explain the principles of the present invention.

In order to better understand the technical solutions of the present invention, embodiments of the present invention will be described in detail below with reference to the accompanying drawings.

It should be noted that the described embodiments are only some of the embodiments of the present invention, rather than all of the embodiments. Based on the embodiments in the present invention, all other embodiments obtained by those of ordinary skill in the art without creative efforts fall within the scope of protection of the present invention.

The terminology used in the embodiments of the present invention is only for the purpose of describing specific embodiments and is not intended to limit the present invention. As used in the embodiments of the present invention and the appended claims, the singular forms "a", "said" and "the" are intended to include the plural forms as well, unless the context clearly dictates otherwise.

It should be understood that the term "and/or" used herein is only an association relationship describing related objects, indicating that there can be three relationships. For example, "A and/or B" can mean three situations: A exists alone, A and B exist simultaneously, and B exists alone. In addition, the character"/" herein generally indicates that the related objects are in an "or" relationship.

It should be noted that directional words such as "upper," "lower," "left," and "right" described in the embodiments of the present invention are described from the perspectives shown in the accompanying drawings and should not be understood as limiting the embodiments of the present invention. Additionally, it should be understood in the context that when an element is referred to as being connected "above" or "below" another element, it can be directly connected "above" or "below" the other element, or also can be indirectly connected "above" or "below" the other element through an intermediate element.

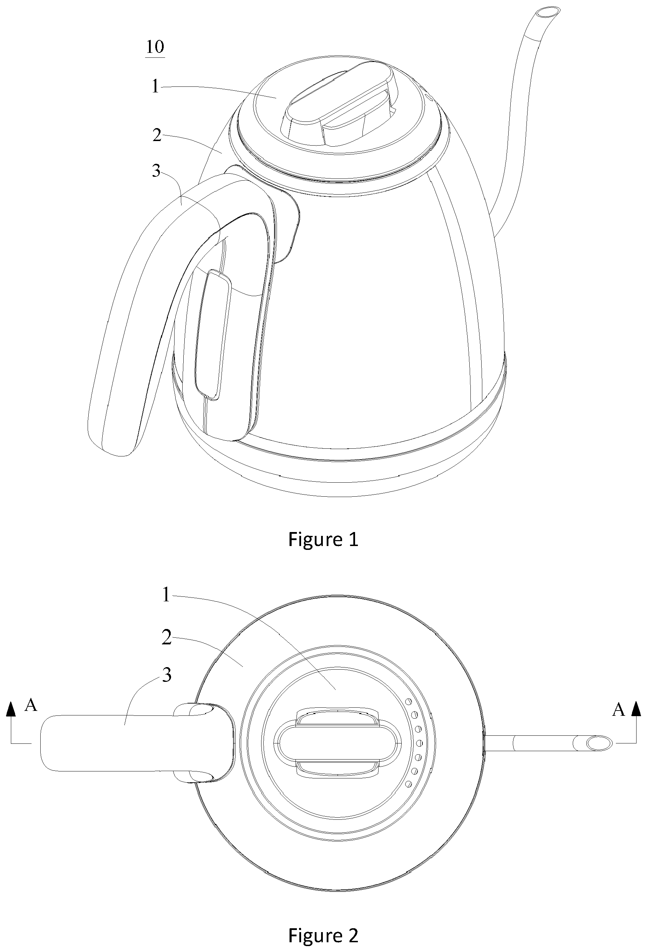

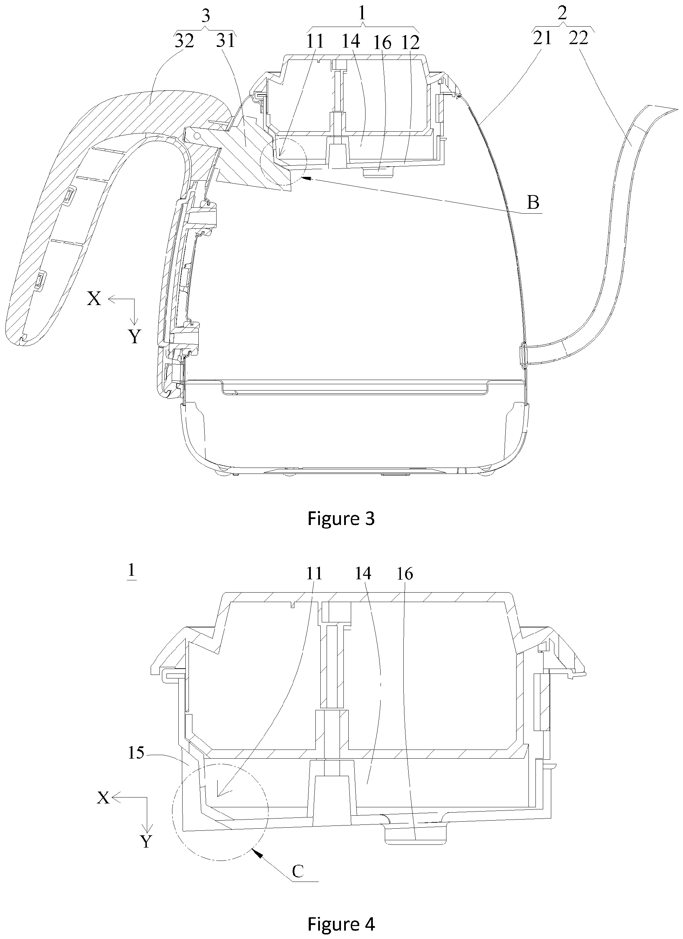

A first aspect of embodiments of the present invention provides a lid, which can be used in the technical field of liquid containers. In reference to Figs. 1 to 2, a lid 1 can cover a container body 2 and thereby form a container 10 used for accommodating liquid. The container 10 can be a kettle, an electric heating kettle, etc. In reference to Fig. 3, the container 10 is generally used for accommodating hot water. Water vapor will flow towards the lid 1 from the inside of the container body 2. The bottom wall 12 of the lid 1 is generally provided with an air inlet 16 via which water vapor can enter the inner chamber 14 of the lid 1. In the inner chamber 14, water vapor condensates into condensed water, which remains in the inner chamber 14 of the lid 1. After having used the container 10 for a period of time, a user needs to discharge condensed water in the inner chamber 14 to reduce the likelihood of bacteria growth inside the lid 1 so as to maintain the lid 1 in a clean state. Therefore, the lid 1 can be provided with a water outlet 11 in communication with the inner chamber 14. When a user removes the lid 1 from the container body 2, the water outlet 11 is in an open state, and condensed water can flow from the inner chamber 14 of the lid 1 to the exterior of the lid 1 via the water outlet 11. Embodiments of the present invention mainly improve the structure of the water outlet 11. Please refer to the following description for specific improvements.

In reference to Figs. 4 to 5, the lid 1 in the embodiment of the present invention is provided with a water outlet 11 used for discharging condensed water in the lid 1 and comprising a first part 111 and a second part 112 that are connected with each other. The first part 111 is arranged in a bottom wall 12 of the lid 1. The second part 112 is arranged in a side wall 13 of the lid 1.

In the present embodiment, in reference to Figs. 4 to 5, when a user needs to discharge the condensed water in the lid 1, the user can just remove the lid 1 from the container body 2 so that the water outlet 11 can be in an open state. As the bottom wall 12 of the lid 1 is provided with the first part 111 of the water outlet 11, the side wall 13 of the lid 1 is provided with the second part 112 of the water outlet 11, and the orientations of the bottom wall 12 and the side wall 13 are different, the orientations of the first part 111 and the second part 112 are different. Therefore, the direction in which condensed water can flow to the exterior of the lid 1 can be the direction through the first part 111 or the direction through the second part 112. Compared to the prior art, where the water outlet is arranged only in the bottom wall or only in the side wall of a lid, the water outlet 11 in the present invention is open towards more directions, and thus condensed water can flow from the inner chamber 14 of the lid 1 to the exterior of the lid 1 in more directions. Thus, condensed water can be discharged rapidly from the water outlet 11, increasing the discharging efficiency. Secondly, in the present invention, the first part 111 arranged in the bottom wall 12 and the second part 112 arranged in the side wall 13 are connected with each other. When a user operates the lid 1 to perform an operation of discharging water, compared to the prior art, it is less possible that condensed water remains at the side wall or at the bottom wall of the lid. This allows the user to discharge the condensed water from the inner chamber 14 of the lid 1 to the exterior of the lid 1 by slightly shaking the lid 1 or with fewer number of times of shaking. Not only is the intensity of operation needed for a user lower, but also the amount of condensed water that remains in the inner chamber 14 of the lid 1 is reduced. The lid 1 is not susceptible to bacteria growth, and the user has a better utilization experience.

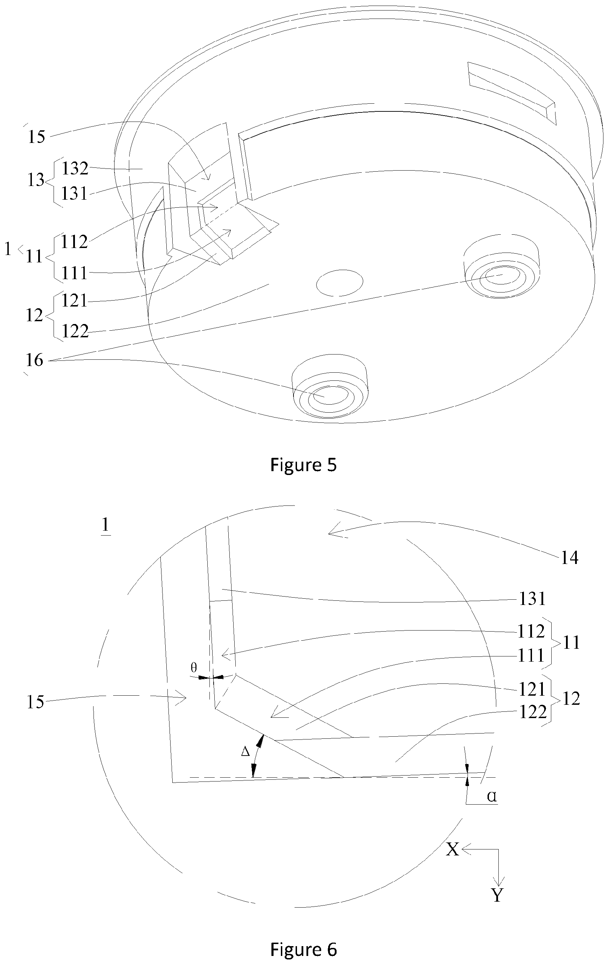

The dotted line in Fig. 5 is a dividing line between the first part 111 and the second part 112.

Optionally, in reference to Fig. 4, the lid 1 is provided with a recess 15 that concaves towards the inner chamber 14 of the lid 1. In reference to Fig. 5, the first part 111 and the second part 112 are both arranged in inner walls of the recess 15.

Since the blocking member for blocking the water outlet 11 of the lid 1 (such as the support 31 shown in Fig. 3) is generally arranged inside the container body 2, the blocking member will protrude relative to the inner wall of the container body 2. In reference to Fig. 4, the lid 1 of the present embodiment is provided with a recess 15 that concaves towards the inner chamber 14. In reference to Fig. 5, the first part 111 and the second part 112 are both arranged in the inner walls of the recess 15. When the lid 1 covers the container body 2, the recess 15 accommodates at least a portion of the blocking member so that the block member can block the water outlet 11 without any structural interference between the lid 1 and the blocking member. The arrangement of the recess 15 in the present invention renders the structure between the lid 1, the container body 2, and the blocking member arranged at the container body 2 more compact. Therefore, there is no need to reduce the overall size of the lid 1, so that the space of the inner chamber 14 of the lid 1 is still relatively large and can accommodate a relatively large amount of condensed water. Thus, a user does not need to discharge condensed water very often, and the user's experience is improved.

In another embodiment (not illustrated), the lid 1 can also not be provided with a recess 15 that concaves towards the inner chamber 14 of the lid 1. That is, the first part 111 and the second part 112 of the water outlet 11 are not depressed towards the inner chamber 14 of the lid 1.

Embodiments below are described with reference to examples wherein the lid 1 is provided with the recess 15.

Optionally, in reference to Fig. 6, the bottom wall 12 of the lid 1 comprises a first bottom wall 121 and a second bottom wall 122 that are connected with each other. The first bottom wall 121 is part of the inner wall of the recess 15. The first part 111 is arranged in the first bottom wall 121. The end of the second bottom wall 122 close to the first bottom wall 121 is lower than the end of the second bottom wall 122 away from the first bottom wall 121.

In the present embodiment, in reference to Fig. 6, as the second bottom wall 122 forms the bottom structure of the inner chamber 14, most of the condensed water accumulates on the second bottom wall 122. When the end of the second bottom wall 122 close to the first bottom wall 121 is lower than the end of the second bottom wall 122 away from the first bottom wall 121, the second bottom wall 122 is inclined relative to a horizontal plane (as shown in Fig. 6, the dotted line parallel with the direction X), and condensed water mainly accumulates at the end of the second bottom wall 122 close to the first bottom wall 121 under the effect of gravity. In other words, the condensed water mainly accumulates at the end of the second bottom wall 122 close to the water outlet 11. Therefore, when the water outlet 11 is in an open state, condensed water can be rapidly discharged from the water outlet 11, and is not prone to remain at the end of the second bottom wall 122 away from the first bottom wall 121. More specifically, once the lid 1 is removed from the blocking member arranged in the container body, the water outlet 11 is opened and condensed water can flow directly from the water outlet 11 to the inside of the container body 2 before the lid 1 is removed from the container body. This improves the discharging efficiency and prevents the condensed water inside the lid from dripping onto a tabletop or the like, and thus improves the user experience.

In reference to Fig. 6, the angle α formed between the second bottom wall and the horizontal plane (the dotted line parallel with the direction X as shown in Fig. 6) is such that 1° ≤ α ≤ 5°. Specifically, α can be 1°, 2°, 3°, 4°, or 5°.

In addition, in reference to Fig. 5, the side wall 13 of the lid 1 comprises a first side wall 131 and a second side wall 132. The first side wall 131 is part of the inner wall of the recess 15. The second part 112 of the water outlet 11 is arranged in the first side wall 131. The first side wall 131 is connected with the first bottom wall 121 and bends relative to the first bottom wall 121. The second side wall 132 forms the main body of the side wall 13.

In reference to Fig. 6, the plane in which the first bottom wall 121 is located can be inclined relative to the horizontal plane (such as the dotted line parallel with the direction X in Fig. 6). The end of the first bottom wall 121 away from the second bottom wall 122 is higher than the end of the first bottom wall 121 close to the second bottom wall 122. With such arrangement, the first part 111 of the water outlet 11 located in the first bottom wall 121 is inclined, and thus the opening direction of the first part 111 (i.e. the direction perpendicular to the plane in which the first part 111 is located) is oriented within the angle formed between the direction X and the direction Y as shown in Fig. 6. This opening direction facilitates the discharge of the condensed water from the lid 1. Condensed water is not prone to remain on the inner wall of the lid 1. Therefore, a user can discharge the condensed water from the inner chamber 14 of the lid 1 to the exterior of the lid 1 by slightly shaking the lid 1 or with fewer times of shaking. Not only the intensity of shaking required for a user is lower, but also the residue of condensed water in the inner chamber 14 of the lid 1 is less. The lid 1 is not susceptible to bacteria growth, and the user experience is better.

In reference to Fig. 6, the angle between the plane in which the first bottom wall 121 is located and the plane in which the second bottom wall 122 is located can be an obtuse angle, a right angle, or an acute angle. The angle between the plane in which the first bottom wall 121 is located and the plane in which the first side wall 131 is located can be an obtuse angle.

In addition, the dotted line inside the water outlet 11 in Fig. 6 is a dividing line between the first part 111 and the second part 112.

In the above-described embodiment, in reference to Figs. 5 to 6, at least a part of the first part 111 of the water outlet 11 is arranged at the connection between the first bottom wall 121 and the second bottom wall 122, so that condensed water located at a lower water level and close to the water outlet 11 faces smaller obstruction. Condensed water can easily flow from the second bottom wall 122 to the first part 111 of the water outlet 11 and is not prone to remain in the inner chamber 14 of the lid 1, resulting in a higher discharging efficiency and providing a better user experience.

A second aspect of embodiments of the present invention provides a container. In reference to Fig. 1, the container 10 comprises a container body 2 and the lid 1 described above. The lid 1 is capable of covering the container body 2 so as to form the container 10 for accommodating liquid. The container 10 of the present invention also provides the above-described effects brought by the lid 1, which are not repeatedly described here.

Optionally, in reference to Figs. 1 to 3, the container 10 may further comprise a handle 3 connected with the container body 2. At least part of the handle is located inside the container body 2 and is capable of blocking the water outlet 11 arranged at the lid 1.

In the present embodiment, in reference to Figs. 1 to 3, the handle 3 is connected with the container body 2 and designed to be held by a user, who thereby indirectly operates the container body 2. With the handle 3 connected with the container body 2, the at least part of the handle 3 located inside the container body 2 can block the water outlet 11 of the lid 1. Compared to the prior art, wherein a blocking member used for blocking a water outlet has to be separately provided in the container, the structure of the container 10 of the present invention is simpler, and the required manufacturing and assembly process are also simpler.

In reference to Fig. 3, the container body 2 comprises a body 21 and a spout 22. The body 21 serves as a main part that accommodates water. The lid 1 is capable of covering the body 21. The handle 3 is connected with the body 21. The spout 22 is in communication with the inside of the body 21 so that liquid inside the body 21 can flow out via the spout 22.

In reference to Fig. 3, the handle 3 comprises a handle body 32 and a support 31. The handle body 32 is connected with the container body 2 via the support 31. At least part of the support 31 is located inside the container body 2. The support 31 is capable of blocking the water outlet 11.

In the present invention, in reference to Fig. 3, the handle body 32 is connected with the container body 2 via the support 31 and is designed to be held by a hand of a user, who thereby indirectly operates the container body 2. The support 31 can perform both a function of connecting the container body 2 together with the handle body 32, and a function of blocking the water outlet 11 arranged at the lid 1. Compared to the prior art, wherein a blocking member used for blocking a water outlet has to be separately provided in the container, the structure of the container 10 of the present invention is simpler, and the required manufacturing and assembly process are also simpler.

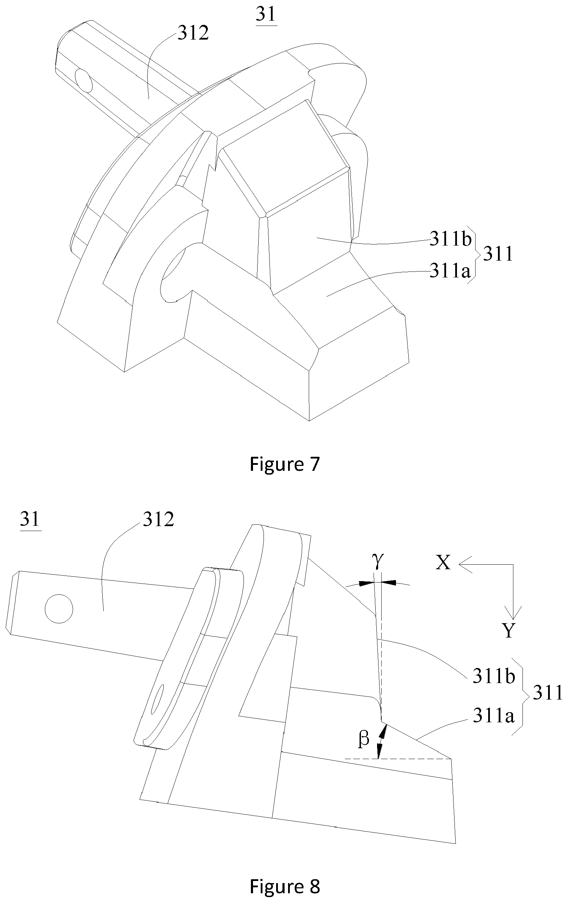

In reference to Fig. 3 and 7, the support 31 may pass through the side wall of the container body 2 so that a part of the support 31 is located inside the container body 2, and the other part of the support 31 is located outside the container body 2. The part located outside the container body 2 is a connecting rod 312 with which the handle body 32 is removably connected.

Optionally, in reference to Fig. 5, the lid 1 is provided with a recess 15 that concaves towards the inner chamber 14 of the lid 1. The water outlet 11 is arranged at an inner wall of the recess 15. In reference to Fig. 7, the support 31 comprises a protruding cooperating part 311, at least part of the cooperating part 311 is capable of being fitted into the recess 15 to block the water outlet 11.

In the present embodiment, in reference to Fig. 3, when the lid 1 covers the container body 2, at least part of the cooperating part 311 of Fig. 7 is fitted into the recess 15 and abuts against the inner wall of the recess 15. Such arrangement allows the cooperating part 311 to perform a function of blocking the water outlet 11 so that condensed water can accumulate inside the lid 1. At the same time, such arrangement further allows the cooperating part 311 to perform a position limiting function with regard to the rotation movement of the lid 1 along its own circumferential direction.

In another embodiment which is not illustrated, when the lid 1 covers the container body 2, at least part of the cooperating part 311 may also pass through the water outlet 11, and a side wall of the cooperating part 311 abuts against the side wall forming the water outlet 11, so as to block the water outlet 11.

In reference to Figs. 7 to 8, the cooperating part 311 may have a first covering face 311a and a second covering face 311b that are connected with each other. The first covering face 311a is capable of covering the first part 111 of the water outlet 11. The second covering face 311b is capable of covering the second part 112 of the water outlet 11. The embodiment of the present invention allows blocking the water outlet 11 by covering it. Such covering renders the operation of blocking the water outlet 11 relatively simple and the difficulty of operation by a user relatively low, providing a better user experience.

In reference to Fig. 8, the first covering face 311a is inclined relative to a horizontal plane (the direction X as shown in Fig. 8), with the end of the first covering face 311a close to the second covering face 311b higher than the end of the first covering face 311a away from the second covering face 311b, and/or, the second covering face 311b is inclined relative to a vertical direction (the direction Y as shown in Fig. 8), with the end of the second covering face 311b away from the first covering face 311a closer to the exterior of the container body 2 than the end of the second covering face 311b close to the first covering face 311a.

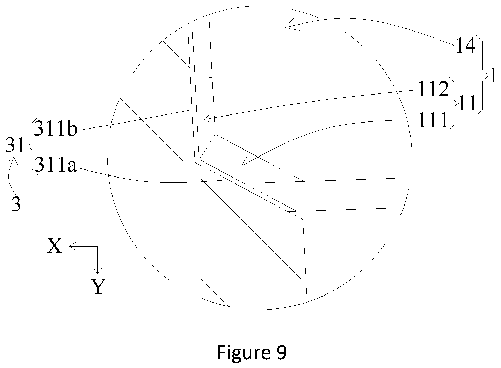

In one embodiment, in reference to Fig. 8, only the first covering face 311a is inclined relative to a horizontal plane (the dotted line parallel with the direction X as shown in Fig. 8), and the end of the first covering face 311a close to the second covering face 311b is higher than the end of the first covering face 311a away from the second covering face 311b. Correspondingly, in reference to Fig. 6, the plane in which the first part 111 of the water outlet 11 arranged at the bottom wall 12 is located is also inclined relative to a horizontal plane (the dotted line parallel with the direction X as shown in Fig. 6), with the end of the first part 111 close to the second part 112 of the water outlet 11 arranged at the side wall 13 of the lid 1 also higher than the end of the first part 111 away from the second part 112. With such arrangement, in reference to Fig. 9, when the lid 1 covers the container body 2, the cooperation between the first covering face 311a and the first bottom wall 121 is a bevel fit. Under the effect of gravity, the first covering face 311a and the first bottom wall 121 tend to be adaptively fitted. Therefore, the first covering face 311a can always cover the first part 111 so as to achieve the blocking of the first part 111.

To help a reader distinguish the structure of the first covering face 311a and the structure of the first part 111, they are presented in Fig. 9 with a slight offset. In practical use, the first covering face 311a is capable of covering the first part 111. In Fig. 9, the dotted line located inside the water outlet 11 is a dividing line between the first pat 111 and the second part 112.

In addition, the angle β formed between the first covering face 311a and the horizontal plane (the dotted line parallel with the direction X as shown in Fig. 8) is such that 25° ≤ β ≤ 30°. Specifically, β can be 25°, 26°, 27°, 28°, 29°, or 30°. Correspondingly, the angle Δ formed between the plane in which the first part 111 is located (i.e. the first bottom wall 121) and the horizontal plane (the dotted line parallel with the direction X as shown in Fig. 6) is equal to the angle β formed between the first covering face 311a and the horizontal plane (the dotted line parallel with the direction X as shown in Fig. 8).

In another embodiment, in reference to Fig. 8, only the second covering face 311b is inclined relative to a vertical plane (the dotted line parallel with the direction Y as shown in Fig. 8), with the end of the second covering face 311b away from the first covering face 311a closer to the exterior of the container body 2 than the end of the second covering face 311b close to the first covering face 311a. Correspondingly, the plane in which the second part 112 arranged in the first side wall 131 of the lid 1 is located is also inclined relative to the vertical plane (the dotted line parallel with the direction Y as shown in Fig. 6), with the end of the second part 112 close to the first part 111 arranged at the bottom wall 12 of the lid 1 also closer to the exterior of the lid 1 than the end of the second part 112 away from the first part 111. With such arrangement, in reference to Fig. 9, when the lid 1 covers the container body 2, the cooperation between the second covering face 311b and the first side wall 131 is a bevel fit. Under the effect of gravity, the second covering face 311b and the first side wall 131tend to be adaptively fitted. Therefore, the second covering face 311b can always cover the second part 112 so as to achieve the blocking of the second part 112.

Further, in reference to Fig. 9, the inclination of the second covering face 311b results in a space between the second covering face 311b and the vertical plane (the dotted line parallel with the direction Y as shown in Fig. 8). The space is useful for bypassing the first side wall 131 in which the second part 112 is arranged. Therefore, when the lid 1 moves to cover the container body 2, it is unlikely for the support 31 to obstruct the lid 1. The lid 1 can smoothly move into the container body 2, providing a better user experience.

To help a reader distinguish the structure of the second covering face 311b and the structure of the second part 112, they are presented in Fig. 9 with a slight offset. In practical use, the second covering face 311b is capable of covering the second part 112. In Fig. 9, the dotted line located inside the water outlet 11 is a dividing line between the first pat 111 and the second part 112.

In addition, the angle γ formed between the second covering face 311b and the vertical plane (the dotted line parallel with the direction Y as shown in Fig. 8) such that 1° ≤ γ ≤ 5°. Specifically, γ can be 1°, 2°, 3°, 4°, or 5°. Correspondingly, the angle θ formed between the plane in which the second part 112 is located (i.e. the first side wall 131) and the vertical plane (the dotted line parallel with the direction Y as shown in Fig. 6) is equal to the angle γ formed between the second covering face 311b and the vertical plane (the dotted line parallel with the direction Y as shown in Fig. 8).

In yet another embodiment, in reference to Fig. 8, the first covering face 311a is inclined relative to the horizontal plane (the dotted line parallel with the direction X as shown in Fig. 8), with the end of the first covering face 311a close to the second covering face 311b higher than the end of the first covering face 311a away from the second covering face 311b. Correspondingly, in reference to Fig. 6, the plane in which the first part 111 of the water outlet 11 arranged in the bottom wall 12 is located is also inclined relative to the horizontal plane (the dotted line parallel with the direction X as shown in Fig. 6), with the end of the first part 111 close to the second part 112 of the water outlet 11 arranged at the side wall 13 of the lid 1 also higher than the end of the first part 111 away from the second part 112. At the same time, in reference to Fig. 8, the second covering face 311b is inclined relative to the vertical plane (the dotted line parallel with the direction Y as shown in Fig. 8), with the end of the second covering face 311b away from the first covering face 311a closer to the exterior of the container body 2 than the end of the second covering face 311b close to the second covering face 311a. Correspondingly, in reference to Fig. 6, the plane in which the second part 112 arranged in the first side wall 131 of the lid 1 is located is also inclined relative to the vertical plane (the dotted line parallel with the direction Y as shown in Fig. 6), with the end of the second part 112 close to the first part 111 arranged in the bottom wall 12 of the lid 1 also closer to the exterior of the lid 1 than the end of the second part 112 away from the first part 111. This embodiment may achieve simultaneously the effects of the two embodiments previously described, which are not repeatedly described here.

In the above-described embodiment, in reference to Fig. 8, the angle between the plane in which the first covering face 311a is located and the plane in which the second covering face 311b can be an obtuse angle, a right angle, or an acute angle. The structure where the angle between said two planes is an obtuse angle is easier to process. The first covering face 311a, by abutting against the first bottom wall 121 where the first part 111 of the water outlet 11 is located, and the second covering face 311b, by abutting against the first side wall 131 where the second part 112 of the water outlet 11 is located, can perform a position limiting function with regard to the rotation movement of the lid 1 along its own circumferential direction.

What have been described are only preferred embodiments of the present invention and are not intended to limit the scope of the present invention. For those skilled in the art, the present invention may have various modifications and changes. Any modifications, equivalent replacements, improvements, etc. made within the spirit and principles of the present invention shall be included in the scope of protection of the present invention.

## Claims

1. A lid used for covering a container body, **characterized in that**, the lid (1) is provided with a water outlet (11) for discharging condensed water in the lid (1) and comprising a first part (111) and a second part (112) that are connected with each other, the first part (111) being arranged in a bottom wall (12) of the lid (1), the second part (112) being arranged in a side wall (13) of the lid (1).

2. The lid of claim 1, **characterized in that**, the lid (1) is provided with a recess (15) that concaves towards an inner chamber (14) of the lid (1), the first part (111) and the second part (112) being both arranged in an inner wall of the recess (15).

3. The lid of claim 2, **characterized in that**, the bottom wall (12) of the lid (1) comprises a first bottom wall (121) and a second bottom wall (122) that are connected with each other, the first bottom wall (121) being part of the inner wall of the recess (15), the first part (111) being arranged in the first bottom wall (121);
the side wall (13) of the lid (1) comprises a first side wall (131) and a second side wall (132), the first side wall (131) being part of the inner wall of the recess (15), the second part (112) being arranged in the first side wall (131).

4. The lid of claim 3, **characterized in that**, the end of the second bottom wall (122) close to the first bottom wall (121) being lower than the end of the second bottom wall (122) away from the first bottom wall (121).

5. The lid of claim 3 or 4, **characterized in that**, the first bottom wall (121) is inclined relative to a horizontal plane, with the end of the first bottom wall (121) away from the second bottom wall (122) higher than the end of the first bottom wall (121) close to the second bottom wall (122).

6. A container, **characterized in that**, it comprises:
the lid (1) of any one of claims 1 to 5;
a container body (2), the lid (1) being capable of covering the container body (2), a cooperating part (311) capable of blocking the water outlet (11) of the lid (1) being provided inside the container body (2).

7. The container of claim 6, **characterized in that**, the container (10) further comprises a handle (3) connected with the container body (2), at least part of the handle (3) being located inside the container body (2) and comprising the cooperating part (311).

8. The container of claim 7, **characterized in that**, the handle (3) comprises a handle body (32) and a support (31) comprising the cooperating part (311), the handle body (32) being connected with the container body (2) via the support (31), at least part of the support (31) being located inside the container body (2).

9. The container of any one of claims 6 to 8, **characterized in that**, the lid (1) is provided with a recess (15) that concaves towards the inner chamber (14) of the lid (1), the water outlet (11) being arranged in an inner wall of the recess (15);
at least part of the cooperating part (311) being fitted into the recess (15) to block the water outlet (11).

10. The container of any one of claims 6 to 9, **characterized in that**, the cooperating part (311) has a first covering face (311a) and a second covering face (311b) that are connected with each other, the first covering face (311a) being capable of covering the first part (111) of the water outlet (11), the second covering face (311b) being capable of covering the second part (112) of the water outlet (11).

11. The container of claim 10, **characterized in that**, the first covering face (311a) is inclined relative to a horizontal plane, with the end of the first covering face (311a) close to the second covering face (311b) higher than the end of the first covering face (311a) away from the second covering face (311b);
and/or, the second covering face (311b) is inclined relative to a vertical direction, with the end of the second covering face (311b) away from the first covering face (311a) closer to the exterior of the container body (2) than the end of the second covering face (311b) close to the first covering face (311a).

12. The container of claim 11, **characterized in that**, the angle β formed between the first covering face (311a) and the horizontal plane is such that 25° ≤ β ≤ 30°;
and/or, the angle γ formed between the second covering face (311b) and the vertical plane such that 1° ≤ γ ≤ 5°.

13. The container of claim 11 or 12, **characterized in that**, the first part (111) of the water outlet (11) is arranged in the first bottom wall (121) and the second part (112) of the water outlet (11) is arranged in the first side wall (131), the angle Δ formed between the first bottom wall (121) and the horizontal plane being equal to the angle β formed between the first covering face (311a) and the horizontal plane, the angle θ formed between first side wall (131) and the vertical plane being equal to the angle γ formed between the second covering face (311a) and the vertical plane.
